(19) Europäisches Patentamt
European Patent Office
Office européen des brevets

(11) **EP 1 925 806 B1**

(12) **EUROPÄISCHE PATENTSCHRIFT**

(45) Veröffentlichungstag und Bekanntmachung des Hinweises auf die Patenterteilung:
**04.10.2017  Patentblatt 2017/40**

(51) Int Cl.:
***F02G 5/04*** *(2006.01)*    *F01P 9/06* *(2006.01)*

(21) Anmeldenummer: **07022870.5**

(22) Anmeldetag: **26.11.2007**

(54) **System mit einem Organic-Rankine-Kreislauf zum Antrieb zumindest einer Expansionsmaschine, Wärmetauscher zum Antrieb einer Expansionsmaschine, Verfahren zum Betreiben zumindest einer Expansionsmaschine**

System with an organic Rankine cycle for operating at least one expansion machine, heat exchanger for operating one expansion machine, method for operating at least one expansion machine

Système doté d'un cycle organique de Rankine destiné à l'entraînement d'au moins une machine d'expansion, échangeur thermique destiné à l'entraînement d'une machine d'expansion, procédé de fonctionnement d'au moins une machine d'expansion

(84) Benannte Vertragsstaaten:
**DE FR**

(30) Priorität: **24.11.2006  DE 102006055978**

(43) Veröffentlichungstag der Anmeldung:
**28.05.2008  Patentblatt 2008/22**

(73) Patentinhaber: **MAHLE Behr GmbH & Co. KG**
**70469 Stuttgart (DE)**

(72) Erfinder:
• **Burk, Roland**
  **70469 Stuttgart (DE)**
• **Feuerecker, Günther**
  **70567 Stuttgart (DE)**

• **Neumeister, Dirk**
  **70374 Stuttgart (DE)**
• **Heckenberger, Thomas**
  **5837 Fentange (LU)**

(74) Vertreter: **Grauel, Andreas**
  **Grauel IP**
  **Patentanwaltskanzlei**
  **Wartbergstrasse 14**
  **70191 Stuttgart (DE)**

(56) Entgegenhaltungen:
| | |
|---|---|
| CA-A1- 1 146 361 | FR-A1- 2 416 340 |
| FR-A1- 2 868 809 | GB-A- 2 033 017 |
| JP-A- 2005 201 067 | US-A- 4 033 135 |

EP 1 925 806 B1

**Beschreibung**

Die vorliegende Erfindung betrifft ein System mit einem Organic-Rankine-Kreislauf zum Antrieb zumindest einer Expansionsmaschine, einen Wärmetauscher zum Antrieb einer Expansionsmaschine sowie ein Verfahren zum Betreiben zumindest einer Expansionsmaschine.

Verbrennungsmotoren für Kraftfahrzeuge liefern neben der genutzten Antriebsleistung noch Abwärme, die meist ungenutzt an die Umgebung abgeführt wird. Die Abwärme ist zumeist im Kühlmittel enthalten, welches den Motor kühlt. Ferner ist Abwärme im Abgas enthalten, das zumeist ungenutzt an die Umgebung abgegeben wird.

Aus der JP 2002325470 ist beispielsweise bekannt, dass die Abwärme des Abgases zum Betrieb eines Generators genutzt wird, um elektrische Energie zu erzeugen.

Aus der DE 10233763 ist ein Hilfsaggregat für Kraftfahrzeuge bekannt, welches die Abwärme des primären Antriebsmotors zur Erzeugung mechanischer Antriebsenergie nutzt. Ein in die Auspuffanlage des Kraftfahrzeugs integrierter Wärmetauscher erzeugt ein Arbeitsgas, vorzugsweise Wasserdampf.

Aus der EP 1441121 ist ein Dampfkompressions-Arbeitsmittelkreislaufsystem mit einem Arbeitsmittelkreis und einem Rankine-Kreis bekannt. Der Rankine-Kreis weist einen Kompressor, eine Gas-Flüssigkeits-Separiereinrichtung, eine Dekompressionsvorrichtung und einen Verdampfer auf.

Aus der FR 2868809 ist ein System bekannt, welches erlaubt, thermische Energie eines Verbrennungsmotors eines Kraftfahrzeugs wieder zu gewinnen, in dem ein Rankine-Kreislauf verwendet wird, der mechanische Energie erzeugt. Das System weist einen wärmeführenden Kreislauf auf, der dazu bestimmt ist, einen Wärmekessel eines Rankine-Kreislaufs zu erwärmen.

Aus der EP 1431523 ist eine Regeleinrichtung zur Regelung der Verdampfungstemperatur bekannt.

Aus der DE 60116596 ist ein Wärmetauscher bekannt, welcher thermische Energie eines Hochtemperaturfluids von einer Wärmequelle wiedergewinnt.

Aus der US 5000003 ist ein Verfahren zur Rückgewinnung der Wärme eines Verbrennungsmotors bekannt, die normalerweise mittels des Motorkühlmittelkühlers und durch das Motorabgas abgeführt wird. Dieses Verfahren zur Rückgewinnung erfolgt mittels eines Rankine-Kreislaufs, der eine Speisepumpe, einen Speiserhitzer, einen Boiler, einen Überhitzer, eine Scroll-Expander sowie einen luftgekühlten Kondensator aufweist.

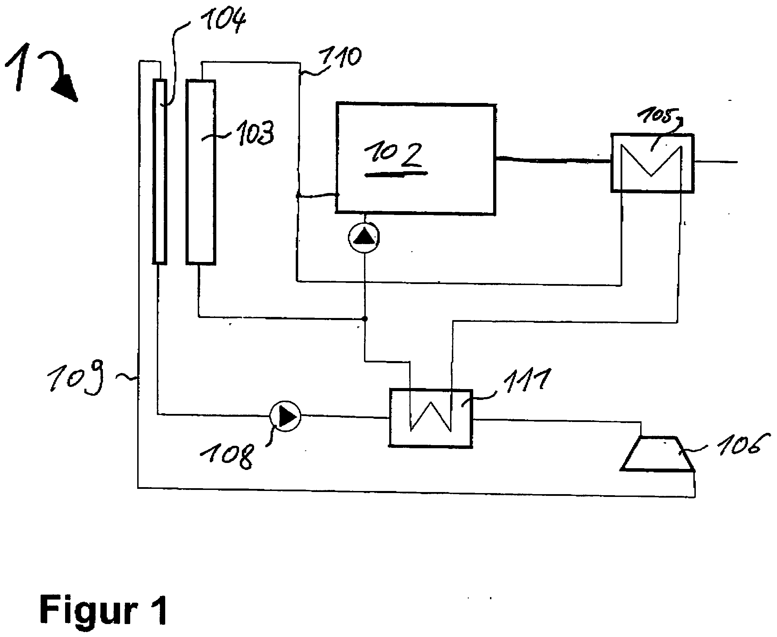

US 4 033 135 offenbart ein System, aufweisend zumindest einen ersten Kreislauf zur Kühlung eines Verbrennungsmotors für ein Kraftfahrzeug, zumindest einen Abgaswärmetauscher zur Verbrennungsmotorabwärmenutzung, zumindest einen Organic-Rankine-Kreislauf zum Antrieb zumindest einer Expansionsmaschine und zur Durchströmung mit zumindest einem ersten Wärmetauschermedium, wobei der Organic-Rankine-Kreislauf neben einer Vorwärmetauscherstufe zum Vorwärmen und/oder Verdampfen zumindest eine zweite Wärmetauscherstufe zum Verdampfen und/oder Überhitzen des ersten Wärmetauschermediums aufweist, wobei die Vorwärmetauscherstufe und die zweite Wärmetauscherstufe von Wasser durchströmt sind. Figur 1 zeigt ein bekanntes System mit einem Rankine-Kreislauf 109 und einem Kühl-Kreislauf 110 zur Kühlung eines Verbrennungsmotors 102.

Der Rankine-Kreislauf 109 weist eine Kälte- oder Speisepumpe 108, einen Verdampfer 111 und eine Expansionsmaschine 106 sowie einen Kondensator 104 auf.

Arbeitsmittel kondensiert in dem Kondensator 104 und wird mittels der Kältepumpe 108 durch den Rankine-Kreislauf 109 gepumpt. Das Arbeitsmittel wird in einem Verdampfer 111 verdampft. Das dampfförmige Arbeitsmittel strömt durch eine Expansionsmaschine 106 und verrichtet Arbeit in der Expansionsmaschine 106. Nach dem Durchströmen der Expansionsmaschine 106 strömt das Arbeitsmittel wieder zurück zum Kondensator 104 und wird in dem Kondensator 104 von der dampfförmigen Phase in die flüssige Phase überführt. Im Kühlkreislauf 110 des Verbrennungsmotors 102 durchströmt Kühlmittel den Verdampfer 111, einen Abgaskühler 105 sowie einen Kühlmittelkühfer 103.

Insbesondere kommt es aufgrund des unterschiedlichen Temperaturprofils zwischen Rankine-Kreislauf 109 und Kühl-Kreislauf 110 zu Wirkungsgradverlusten, d.h. zu einem so genannten Temperatur-Missmatch.

Ferner führt in der Warmlaufphase des Motors die Wärmeentnahme aus dem Kühlmittel des Kühl-Kreislaufs 110 zu einem verzögerten Motorwarmlauf und damit zu einem höheren Kraftstoffverbrauch.

Es ist Aufgabe der vorliegenden Erfindung, die Nachteile des Standes der Technik zu beseitigen und ein verbessertes System zur Verfügung zu stellen, das insbesondere einen höheren Wirkungsgrad ermöglicht. Insbesondere sollen die Nachteile in der Motorwarmlaufphase beseitigt bzw. verbessert werden. Ferner soll insbesondere eine verbesserte Regelung des Systems sowie ein verbesserter Wärmetauscher zur Verfügung gestellt werden. Darüber hinaus soll insbesondere die Anzahl an Wärmetauschern reduziert werden und auf diese Weise Bauraum eingespart werden. Ferner sollen insbesondere die Wärmetauscher des Systems einfacher, insbesondere weniger komplex, ausgebildet werden, wobei gleichzeitig die Wärmetauscherleistung erhöht werden soll.

Die Aufgabe wird durch ein System mit den Merkmalen des Anspruchs 1 gelöst.

Es wird ein System vorgeschlagen, das zumindest einen ersten Kreislauf zur Kühlung eines Verbrennungsmotors für ein Kraftfahrzeug aufweist, mit zumindest einem Abgaswärmetauscher zur Verbrennungsmotorabwärmenutzung, mit zumindest einem Organic-Rankine-Kreislauf zum Antrieb zumindest einer Expansionsmaschine und zur Durchströmung mit zumindest einem ersten Wärmetauschermedium, wobei der Organic-Rankine-Kreislauf neben einer Vorwärmetauscherstufe zum Vorwärmen und/oder Verdampfen zumindest eine zweite Wärmetauscherstufe zum Verdampfen und/oder Überhitzen des ersten Wärmetauschermediums aufweist. Die Vorwärmetauscherstufe und die zweite Wärmetauscherstufe sind von einem zweiten Medium, insbesondere einem Kühlmittel, durchströmt. Insbesondere können die Vorwärmetauscherstufe und die zweite Wärmetauscherstufe von demselben Kühlmittel, insbesondere derselben Kühlflüssigkeit, oder einem unterschiedlichen Kühlmittel, durchströmt sein.

Der erste Kreislauf dient dabei insbesondere zur Kühlung eines Verbrennungsmotors für ein Kraftfahrzeug und ist insbesondere als Kühlmittelkreislauf ausgebildet.

Ein Abgaswärmetauscher dient dabei zur Nutzung der Abwärme des Verbrennungsmotors, wobei der Abgaswärmetauscher insbesondere von Motorabgas durchströmt wird.

Unter "Organic-Rankine-Kreislauf" ist dabei ein Rankine-Kreislauf zum Betreiben insbesondere eines Scroll-Expanders mit organischen Flüssigkeiten mit einer niedrigen Verdampfungstemperatur verwendet. Mögliche Arbeitsmedien sind insbesondere R134a, $CO2$, Blend H, sowie andere halogenierte Kohlenwasserstoffe. Der Organic-Rankine-Kreislauf wird insbesondere genutzt, wenn das zur Verfügung stehende Temperaturgefälle zwischen Wärmequelle und Wärmesenke zu niedrig für den Betrieb eines von Wasserdampf angetriebenen Scroll-Expanders ist.

Der Organic-Rankine-Kreislauf weist dabei zumindest eine Expansionsmaschine, insbesondere eine Scroll-Expander, auf, die mit einem ersten Wärmetauschermedium, insbesondere einem Arbeitsmittel wie beispielsweise R134a, durchströmt wird.

Der Organic-Rankine-Kreislauf weist neben einer Vorwärmetauscherstufe, die insbesondere zum Vorwärmen und/oder zum Verdampfen eines ersten Wärmetauschermediums ausgebildet ist, insbesondere eines Arbeitsmittels, eine zweite Wärmetauscherstufe auf, wobei die zweite Wärmetauscherstufe das erste Wärmetauschermedium, insbesondere das Arbeitsmittel, verdampft bzw das bereits verdampfte erste Wärmetauschermedium weiter erhitzt bzw. überhitzt.

In einer vorteilhaften Weiterbildung der Erfindung ist das System dadurch gekennzeichnet, dass der Organic-Rankine-Kreislauf zumindest einen Kondensator zur Verflüssigung des ersten Wärmetauschermediums, insbesondere des Arbeitsmittels, aufweist. Auf diese Weise wird das erste Wärmetauschermedium besonders vorteilhaft nach dem Durchströmen der Expansionsmaschine, insbesondere der Scroll-Expander, von der gasförmigen Phase in die flüssige Phase überführt.

In einer weiteren vorteilhaften Ausbildung der Erfindung ist das System dadurch gekennzeichnet, dass zumindest ein Kühlmittelkühler zur Kühlung des Verbrennungsmotors mit einem zweiten Wärmetauschermedium, insbesondere einem Kühlmittel, durchströmbar ist bzw. durchströmt wird bzw. durchströmt werden kann.

Ferner ist die Vorwärmetauscherstufe besonders vorteilhaft mit einem zweiten Wärmetauschermedium, insbesondere einem Kühlmittel, durchströmbar bzw. wird damit durchströmt bzw. kann damit durchströmt werden. Ferner sind bzw. können der Kühlmittelkühler und/oder die Vorwärmetauscherstufe in dem ersten Kreislauf, insbesondere in dem Kühlmittelkreislauf zur Motorkühlung angeordnet sein bzw. sind in diesem angeordnet.

Unter "Vorwärmetauscherstufe" ist insbesondere eine Wärmetauschereinheit zu verstehen, die insbesondere den Wärmeaustausch zwischen dem ersten Wärmetauschermedium, insbesondere dem Arbeitsmittel und dem zweiten Wärmetauschermedium, insbesondere dem Kühlmittel, ermöglicht. Dabei wird das erste Wärmetauschermedium von dem zweiten Wärmetauschermedium besonders vorteilhaft vorerwärmt bzw. verdampft.

Unter der "zweiten Wärmetauscherstufe" ist dabei insbesondere eine Wärmetauschereinheit zu verstehen, die den Wärmeaustausch zwischen einem ersten Wärmetauschermedium und einem weiteren, insbesondere anderen, Wärmetauschermedium, insbesondere dem zweiten Wärmetauschermedium, ermöglicht. Dabei wird das erste Wärmetauschermedium, insbesondere das Arbeitsmittel, in der zweiten Wärmetauscherstufe besonders vorteilhaft, insbesondere im Vergleich mit der Vorwärmetauscherstufe, weiter erwärmt bzw. verdampft bzw. überhitzt.

Unter "Überhitzen" ist dabei insbesondere zu verstehen, dass das erste Wärmetauschermedium, welches sich bereits in der Dampfphase befindet, weiter erhitzt wird. Erfindungsgemäß wird vorgesehen, dass im ersten Kreislauf, insbesondere dem Kühlmittelkreislauf, abströmseitig des Verbrennungsmotors zumindest eine Verzweigungsstelle vorgesehen ist zur Aufteilung in einen ersten Teilstrom zur Durchströmung des Kühlmittelkühlers und in einem zweiten Teilstrom. Auf diese Weise kann besonders vorteilhaft ein zweites Wärmetauschermedium, insbesondere Kühlmittel, ungekühlt einem Abgaswärmetauscher und/oder der Vorwärmetauscherstufe und/oder der zweiten Wärmetauscherstufe zugeführt werden.

In einer weiteren vorteilhaften Ausgestaltung ist ein zweiter Kreislauf vorgesehen, in dem der zumindest eine Abgaswärmetauscher und die zweite Wärmetauscherstufe angeordnet sind. Auf diese Weise kann der erste Kreislauf, insbesondere der Kühlmittelkreislauf zur Motorkühlung, das erste Wärmetauschermedium, insbesondere das Arbeitsmittel, besonders vorteilhaft in der Vorwärmetauscherstufe vorerwärmen bzw, verdampfen. In dem zweiten Kreislauf wird insbesondere besonders vorteilhaft die Abwärme des Abgases des Verbrennungsmotors zur weiteren Erwärmung bzw. Verdampfung bzw. Überhitzung des ersten Wärmetauschermediums in der zweiten Wärmetauscherstufe genutzt.

In einer weiteren vorteilhaften Ausbildung der Erfindung sind der erste Kreislauf und der zweite Kreislauf parallel geschaltet. Unter "parallel geschaltet" soll insbesondere verstanden werden, dass ein Teil des Motorkühlmittels durch einen Abgaswärmetauscher, eine zweite Wärmetauscherstufe und die Vorwärmetauscherstufe strömt und ein anderer Teil des Motorkühlmittels direkt zur Vorwärmetauscherstufe strömt. Auf diese Weise können der erste Kreislauf, insbesondere der Kühlmittelkreislauf zur Kühlung des Motors, und der zweite Kreislauf zur Durchströmung des Abgaswärmetauschers besonders vorteilhaft verbunden bzw. getrennt werden. Alternativ ist auch eine Reihenschaltung möglich, wobei das Motorkühlmittel durch einen Abgaswärmetauscher, eine zweite Wärmetauscherstufe und die Vorwärmetauscherstufe oder einen hierzu parallel geschalteten Bypass strömt, und anschließend (oder vorhergehend) das Motorkühlmittel durch die Vorwärmetauscherstufe oder einen Bypass hierzu strömt.

Unter dem "ersten Kreislauf" soll insbesondere ein Kühlmittelkreislauf zur Kühlung eines Verbrennungsmotors verstanden werden. Erfindungsgemäß wird vorgesehen, dass der erste Kreislauf zumindest eine zweite Verzweigungsstelle aufweist, die abströmseitig der ersten Verzweigungsstelle angeordnet ist. Die zweite Verzweigungsstelle dient insbesondere zur Aufteilung des zweiten Teilstroms in einen dritten Teilstrom und einen Zweigstrom zur Durchströmung des Abgaswärmetauschers und/oder der zweiten Wärmetauscherstufe. Der dritte Teilstrom dient insbesondere besonders vorteilhaft dazu, dass er die Vorwärmetauscherstufe durchströmt. Ferner kann der dritte Teilstrom besonders vorteilhaft mit dem Zweigstrom gemischt werden, nachdem der Zweigstrom die zweite Wärmetauscherstufe durchströmt hat.

In einer weiteren vorteilhaften Ausgestaltung der Erfindung ist vorgesehen, dass zumindest eine erste Vereinigungsstelle zuströmseitig der Vorwärmetauscherstufe vorgesehen ist zur Vereinigung des Zweigstroms und des dritten Teilstroms zum zweiten Teilstrom.

Auf diese Weise können aufgrund der unterschiedlichen Massenströme in dem Zweigstrom und in dem zweiten Teilstrom die Temperaturverläufe im Organic-Rankine-Kreislauf und im Kühlmittelkreislauf optimal aufeinander abgestimmt werden, insbesondere kann dadurch eine Anhebung einer Temperatur T2 des Kühlmittels zuströmseitig der zweiten Wärmetauscherstufe besonders vorteilhaft erfolgen.

In einer vorteilhaften Weiterbildung der Erfindung ist das System dadurch gekennzeichnet, dass zumindest eine zweite Vereinigungsstelle zuströmseitig des Verbrennungsmotors vorgesehen ist, die insbesondere der Vereinigung des ersten Teilstroms und des zweiten Teilstroms dient. Auf diese Weise sind der erste Teilstrom, welcher den Kühlmittelkühler durchströmt hat und der zweite Teilstrom, insbesondere zur Verdampfung bzw. Überhitzung des ersten Wärmetauschermediums, besonders vorteilhaft vereinigbar.

Weiterhin kann erfindungsgemäß besonders vorteilhaft vorgesehen sein, dass an der ersten Verzweigungsstelle ein zweiter Bypassteilstrom zum Bypassen des Kühlmittelkühlers abzweigt und/oder dass abströmseitig der zweiten Wärmetauscherstufe ein erster Bypassteilstrom zum Bypassen des Verbrennungsmotors abzweigt. Insbesondere weisen der erste Bypassteilstrom und/oder der zweite Bypassteilstrom besonders vorteilhaft ein erstes Bypassventil auf. Auf diese Weise ist der Organic-Rankine-Kreislauf besonders vorteilhaft kühlmittelseitig überbrückbar, wenn der Organic-Rankine-Kreislauf nicht betrieben werden soll, insbesondere die Motoraufwärmung aber bereits abgeschlossen ist. Besonders vorteilhaft müssen Druckverluste des Organic-Rankine-Kreislaufs nicht überwunden werden, wodurch ein erhöhter Leistungsbedarf für die Pumpe zum Pumpen des Kühlmittels vermieden werden kann und ferner der Kraftstoffbedarf besonders vorteilhaft gesenkt werden kann.

In einer weiteren vorteilhaften Ausbildung der Erfindung bilden die Vorwärmetauscherstufe und die zweite Wärmetauscherstufe eine Baueinheit. Auf diese Weise kann Bauraum besonders vorteilhaft durch die kompakte Ausbildung der Vorwärmetauscherstufe und der zweiten Wärmetauscherstufe in einer Baueinheit eingespart werden.

In einer weiteren Ausgestaltung der Erfindung ist die Vorwärmetauscherstufe als zumindest ein Verdampfer und/oder die zweite Wärmetauscherstufe als zumindest ein Überhitzer ausgebildet.

Unter "Überhitzer" ist dabei insbesondere eine Wärmetauschereinheit bzw. ein Wärmetauscher zu verstehen, der bereits verdampftes Arbeitsmittel weiter erwärmt.

In einer vorteilhaften Weiterbildung der Erfindung weist der erste Kreislauf eine Pumpe zum Pumpen des zweiten Wärmetauschermediums auf, wobei die Pumpe abströmseitig oder zuströmseitig des Verbrennungsmotors angeordnet ist. Auf diese Weise wird zweites Wärmetauschermedium, insbesondere Kühlmittel, besonders vorteilhaft durch den ersten Kreislauf gepumpt.

Erfindungsgemäß ist weiter ein Wärmetauscher vorgesehen, der zumindest eine Vorwärmetauscherstufe zum Verdampfen eines ersten Wärmetauschermediums, insbesondere eines Arbeitsmittels, und eine zweite Wärmetauscherstufe zur Überhitzung, insbesondere zum weiteren Erwärmen von bereits verdampftem Arbeitsmittel, zum Antrieb einer Expansionsmaschine für ein System nach einem der Ansprüche 1 bis 13 aufweist.

Erfindungsgemäß ist ferner die Verwendung eines Wärmetauschers nach Anspruch 14 für einen Organic-Rankine-Kreis zum Antrieb einer Expansionsmaschine vorgesehen.

Erfindungsgemäß ist weiter ein Verfahren zum Betreiben zumindest einer Expansionsmaschine eines Organic-Rankine-Kreis-Prozesses vorgesehen, wobei das Verfahren folgende Verfahrensschritte aufweist:

Ein erstes Wärmetauschermedium, insbesondere ein Arbeitsmittel, wird in einem Kondensator verflüssigt. Anschließend erfolgt eine Druckerhöhung des ersten Wärmetauschermediums mittels einer Speisepumpe. Das erste Wärmetauschermedium wird mittels einer Vorwärmetauscherstufe erwärmt, insbesondere verdampft. Das erste Wärmetauschermedium wird mittels einer zweiten Wärmetauscherstufe weiter erhitzt, insbesondere überhitzt. Das verdampfte erste Wärmetauschermedium durchströmt die Expansionsmaschine.

Gemäß einer weiteren vorteilhaften Ausbildung der Erfindung strömt zweites Wärmetauschermedium, insbesondere Kühlmittel, nach dem Durchströmen eines Abgaswärmetauschers durch die zweite Wärmetauscherstufe, insbesondere durch den zumindest einen Überhitzer.

Gemäß einer weiteren vorteilhaften Ausgestaltung wird die Vorwärmetauscherstufe von einem zweiten Wärmetauschermedium durchströmt, wobei für die Temperatur $T_{VWT}$ des zweiten Wärmetauschermediums am Eintritt in die Vorwärmetauscherstufe gilt:

$$T_{VM} \leq T_{VWT} \leq T_{ZWT}.$$

Die Temperatur $T_{VM}$ entspricht dabei im Wesentlichen der Temperatur des zweiten Wärmetauschermediums nach dem Durchströmen des Verbrennungsmotors. Die Temperatur $T_{ZWT}$ entspricht dabei im Wesentlichen der Temperatur des zweiten Wärmetauschermediums nach dem Durchströmen der zweiten Wärmetauscherstufe.

Weitere vorteilhafte Ausgestaltungen der Erfindung ergeben sich aus den Unteransprüchen und aus der Zeichnung.

Die Gegenstände der Unteransprüche beziehen sich sowohl auf das erfindungsgemäße System mit einem Organic-Rankine-Kreislauf zum Antrieb zumindest einer Expansionsmaschine als auch auf den Wärmetauscher zum Antrieb einer Expansionsmaschine als auch auf das Verfahren zum Betreiben zumindest einer Expansionsmaschine mit einem Organic-Rankine-Kreisprozess.

Ausführungsbeispiele der Erfindung sind in der Zeichnung dargestellt und werden im Folgenden näher erläutert, wobei eine Beschränkung der Erfindung hierdurch nicht erfolgen soll. Es zeigen

Figur 1: ein bereits bekanntes System mit einem Rankine-Kreislauf;

Figur 2: ein bereits bekanntes System mit einem Organic-Rankine-Kreislauf, wobei die Vorwärmetauscherstufe von einem ersten Kreislauf und die zweite Wärmetauscherstufe von einem zweiten Kreislauf durchströmt wird;

Figur 3: ein System mit einem Organic-Rankine-Kreislauf, wobei der erste Kreislauf und der zweite Kreislauf in Strömungsverbindung stehen;

Figur 4a: ein System, wobei die Vorwärmetauscherstufe und die zweite Wärmetauscherstufe eine Baueinheit bilden und die Kühlmittelpumpe zuströmseitig des Verbrennungsmotors angeordnet ist;

Figur 4b: ein System, wobei die Vorwärmetauscherstufe und die zweite Wärmetauscherstufe eine Baueinheit bilden und die Kühlmittelpumpe abströmseitig des Verbrennungsmotors angeordnet ist;

Figur 5a: ein System, das eine erste Bypassleitung zum Bypassen des Verbrennungsmotors aufweist, wobei eine erste Ventileinrichtung in der ersten Bypassleitung angeordnet ist;

Figur 5b: ein System mit einer zweiten Bypassleitung zum Bypassen des Kühlmittelkühlers, wobei die erste Ventileinrichtung in der zweiten Bypassleitung angeordnet ist.

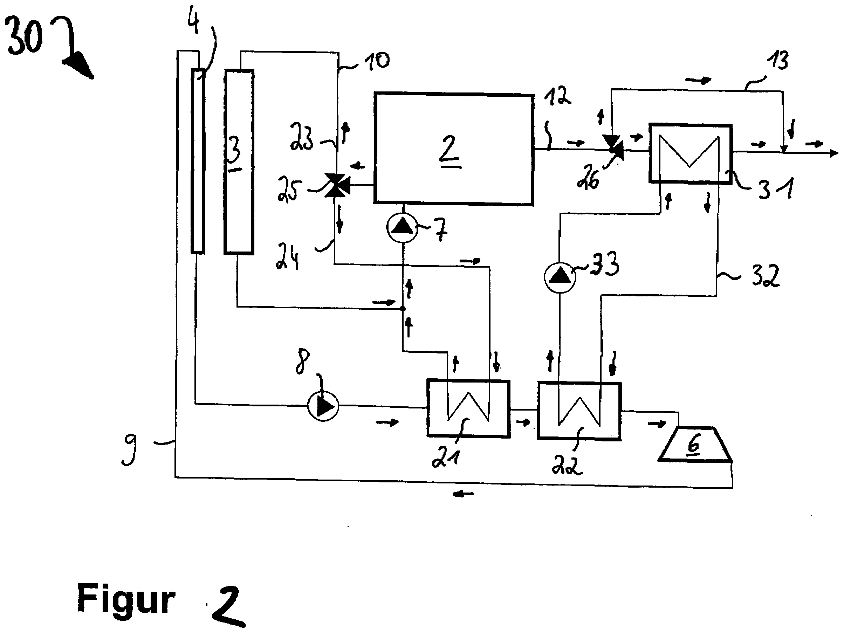

**Figur 2** zeigt ein System 30 mit einem Organic-Rankine-Kreislauf 9, wobei die Vorwärmetauscherstufe 21 von dem ersten Kreislauf 10 beströmt und die zweite Wärmetauscherstufe 22 von dem zweiten Kreislauf 32 durchströmt wird.

Der Organic-Rankine-Kreislauf 9 weist einen Kondensator 4, eine Speisepumpe 8, eine Vorwärmetauscherstufe 21 sowie eine zweite Wärmetauscherstufe 22 auf.

Die zweite Wärmetauscherstufe 22 ist in dem in Figur 2 dargestellten Ausführungsbeispiel als Abgaswärmetauscher 5 ausgebildet. Ferner weist der Organic-Rankine-Kreislauf 9 eine Expansionsmaschine 6, insbesondere eine Scroll-Expander, auf. Der Scroll-Expander wird in umgekehrter Weise wie ein Scroll-Verdichter betrieben. Er besteht insbesondere aus zwei ineinander verschachtelten Spiralen, von denen eine stationär ist und die andere kreisförmig in der ersten bewegt wird. Dabei berühren sich die Spiralen mehrfach und bilden innerhalb der Windungen mehrere ständig kleiner werdende Kammern. In einer anderen Ausführungsform ist die Expansionsmaschine 6 eine Scroll- Expander, ein Kolbenexpander usw.

Erstes Wärmetauschermedium, insbesondere Arbeitsmittel, wie beispielsweise R134a, $CO_2$ oder Blend

H, wird in dem Kondensator 4 von der gasförmigen Phase in die flüssige Phase überführt. Das flüssige Arbeitsmittel durchströmt anschließend die Speisepumpe 8, die insbesondere zum Pumpen des Arbeitsmittels in dem Organic-Rankine-Kreislauf 9 dient. In einem anderen nicht dargestellten Beispiel ist die Speisepumpe abströmseitig der Vorwärmetauscherstufe 21 angeordnet. In diesem nicht dargestellten Beispiel erfolgt in der Vorwärmetauscherstufe 21 ein Erwärmen, aber noch kein Verdampfen des Arbeitsmittels.

In einem anderen Beispiel wird das Arbeitsmittel in der Vorwärmetauscherstufe 21 bereits verdampft, so dass es nach dem Durchströmen der Vorwärmetauscherstufe 21 im Wesentlichen in der gasförmigen Phase vorliegt. In der zweiten Wärmetauscherstufe 22 wird das bereits im Wesentlichen gasförmige Arbeitsmittel weiter erhitzt, insbesondere überhitzt.

Das dampfförmige Arbeitsmittel durchströmt die Expansionsmaschine 6, insbesondere die Scroll-Expander. In der Expansionsmaschine 6, insbesondere der Scroll-Expander, wird beispielsweise mechanische und/oder mittels eines Generators elektrische Energie erzeugt.

Der Verbrennungsmotor 2 wird auf nicht dargestellte Weise mit einem Luft/Kraftstoff-Gemisch beströmt, welches in dem Verbrennungsmotor 2 verbrennt. Aufgrund der Verbrennung entstehen Abgase, welche über die Abgasleitung 12 aus dem Verbrennungsmotor abgeführt werden. Eine dritte Ventileinrichtung ist insbesondere als Bypassklappe bzw. Bypassventil 26 ausgebildet. Die Ventileinheit 26 kann in einem anderen Beispiel auch als Kombiventil ausgebildet sein. Unter einem "Kombiventil" wird dabei eine Ventileinheit verstanden, die sowohl die Durchflussrate von Abgas regeln kann als auch die Zuführung von Abgas zu einem Abgaswärmetauscher 31 und/oder zu einer Abgasbypassleitung 13. Die Abgasbypassleitung 13 umgeht dabei den Abgaswärmetauscher 31. Abgas kann somit entweder vollständig durch die Abgasbypassleitung 13 strömen, wobei kein Abgas durch den Abgaswärmetauscher 31 strömt. In einer anderen Schaltstellung der dritten Ventileinrichtung 26 strömt das gesamte Abgas durch den Abgaswärmetauscher 31. In einer weiteren Einstellung der dritten Ventileinrichtung strömt Abgas sowohl durch die Abgasbypassleitung 13 als auch den Abgaswärmetauscher 31.

Das System 30 weist ferner einen ersten Kreislauf auf, der als Kühlmittelkreislauf zur Motorkühlung des Verbrennungsmotors 2 ausgebildet ist. Dabei pumpt eine Pumpe 7, insbesondere eine Kühlmittelpumpe, Kühlmittel durch den Verbrennungsmotor und kühlt auf diese Weise den Verbrennungsmotor. Dabei wird das Kühlmittel erwärmt und strömt wieder aus dem Verbrennungsmotor 2 heraus. Eine zweite Ventileinrichtung 25 regelt dabei die Aufteilung des erwärmten Kühlmittels in einen ersten Teilstrom 23 und einen zweiten Teilstrom 24. Der erste Teilstrom mit erwärmtem Kühlmittel durchströmt den Kühlmittelkühler 3 und wird dabei abgekühlt. Der Kühlmittelkühler 3 ist ein Luft-/Kühlmittelkühler. Umgebungsluft kühlt dabei das erwärmte Kühlmittel.

Der zweite Teilstrom 24 mit erwärmtem Kühlmittel durchströmt die Vorwärmetauscherstufe 21 und gibt dabei insbesondere Wärme an das Arbeitsmittel des Organic-Rankine-Kreislaufs ab. Auf diese Weise wird das Arbeitsmittel des Organic-Rankine-Kreislaufs erwärmt bzw. verdampft.

Nach dem Durchströmen der Vorwärmetauscherstufe 21 werden der zweite Teilstrom 24 und der erste Teilstrom 23 an einer nicht näher bezeichneten Vereinigungsstelle wieder zusammengeführt.

Der Abgaswärmetauscher 31 ist als Abgas-/Kühlmittelkühler ausgebildet.

Der zweite Kreislauf 32, insbesondere der Kühlmittelkreislauf, weist die zweite Wärmetauscherstufe 22, den Abgaswärmetauscher 31 sowie eine zweite Kühlmittelpumpe 33 auf.

Im dargestellten Beispiel zirkulieren im ersten Kreislauf 10 und im zweiten Kreislauf 32 dasselbe zweite Wärmetauschermedium, insbesondere Kühlmittel, wie beispielsweise eine wasserhaltige Kühlflüssigkeit. In einem anderen Beispiel weisen der erste Kreislauf 10 und der zweite Kreislauf 32 unterschiedliche Wärmetauschermedien, insbesondere Kühlmedien wie Kühlflüssigkeiten auf.

Das erste Wärmetauschermedium, insbesondere das Arbeitsmittel, wird in der Vorwärmetauscherstufe 21 erwärmt und in der zweiten Wärmetauscherstufe 22 verdampft und/oder überhitzt. In einem anderen Beispiel wird das erste Wärmetauschermedium, insbesondere das Arbeitsmittel, in der Vorwärmetauscherstufe 21 verdampft und in der zweiten Wärmetauscherstufe 22 überhitzt. "Überhitzen" meint dabei das weitere Erwärmen des bereits dampfförmigen ersten Wärmetauschermediums, insbesondere des Arbeitsmittels.

Der Vorteil des Systems 30 besteht in einer Art Pufferung der Lastschwankungen durch die thermische Trägheit des zweiten Kreislaufs 32. Zum anderen wird eine Überhitzung des Arbeitsmittels durch Vermeidung eines direkten Wärmeaustauschs zwischen Arbeitsmittel und Abgas verhindert. Auf diese Weise kommt es nicht zu einer thermischen Zersetzung des Arbeitsmittels, insbesondere bei Überlastung. Dies kann durch Steuerung der Ventileinrichtung 26 und/oder durch eine Anpassung des Temperaturprofils mittels einer Pumpe erfolgen.

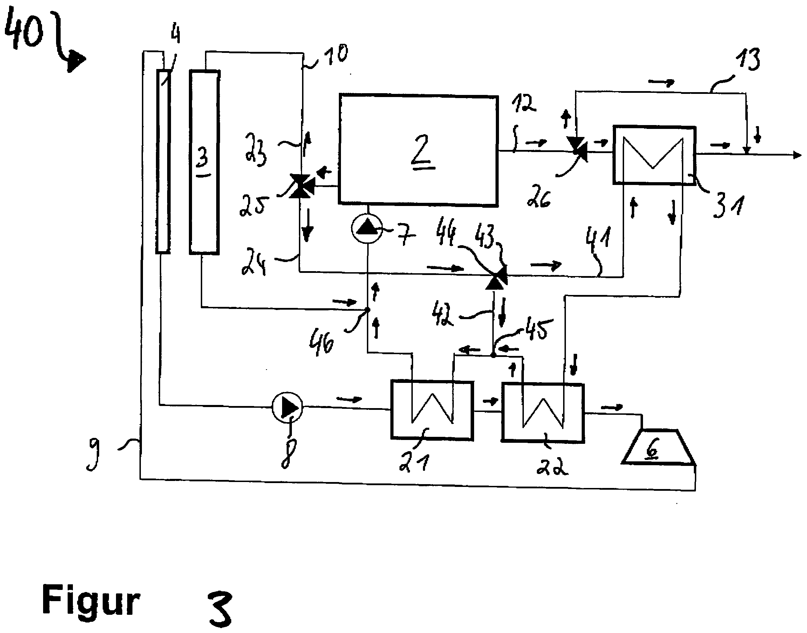

**Figur 3** zeigt ein Erfindungsgemäßes System 40, das einen Organic-Rankine-Kreislauf 9 aufweist, wobei der erste Kreislauf 10 und der zweite Kreislauf in Strömungsverbindung stehen. Gleiche Merkmale sind mit den gleichen Bezugszeichen versehen wie in den vorherigen Figuren.

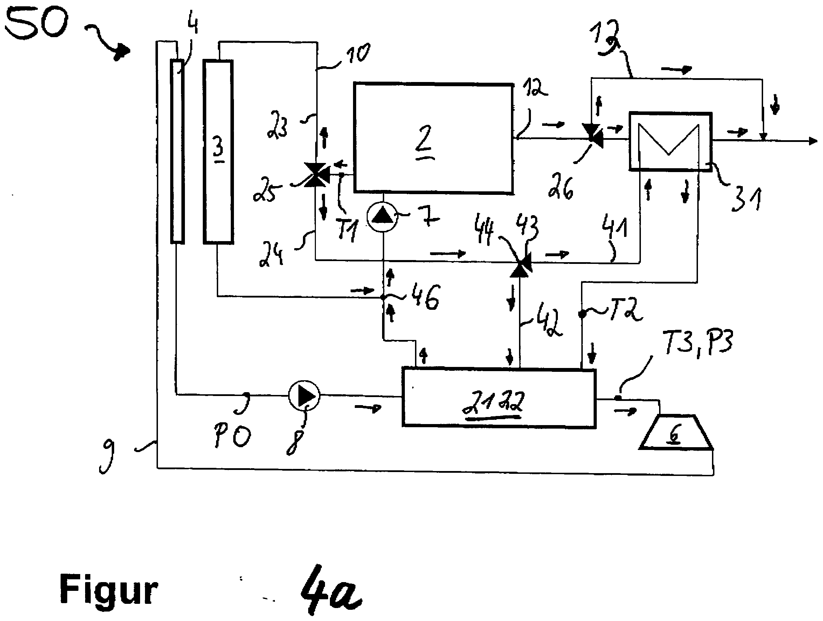

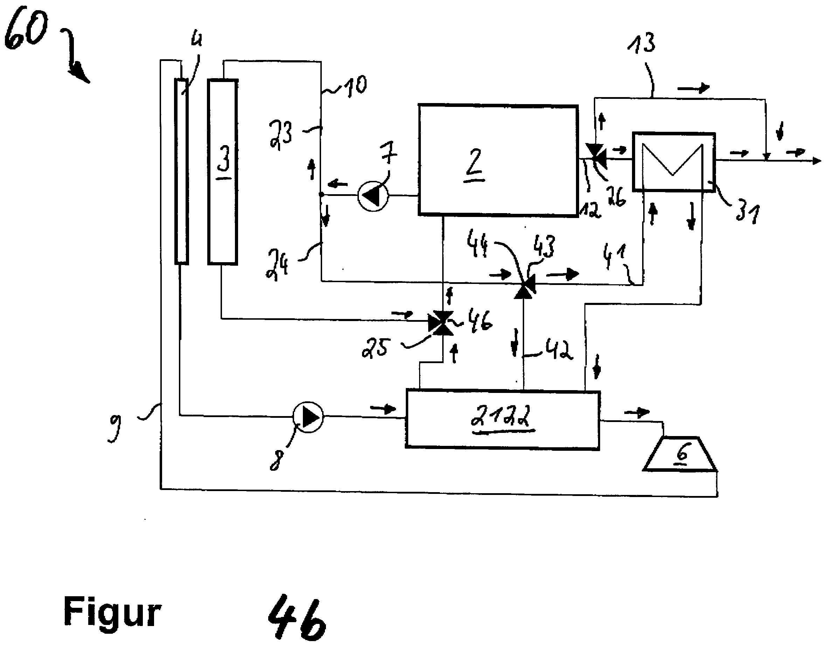

Im Unterschied zu Figur 3 stehen bei dem System 40 der Figur 4 der erste Kreislauf 10 und der zweite Kreislauf in Strömungsverbindung und können insbesondere parallel geschaltet werden. Unter "parallel geschaltet" soll insbesondere verstanden werden, dass ein Teil des Motorkühlmittels durch einen Abgaswärmetauscher, eine zweite Wärmetauscherstufe und die Vorwärmetauscherstufe strömt und ein anderer Teil des Motorkühlmittels direkt zur Vorwärmetauscherstufe strömt.

Der zweite Teilstrom 24 wird an einer zweiten Verzweigungsstelle 44 in den Zweigstrom 41 und den dritten Teilstrom 42 aufgeteilt bzw. kann derart aufgeteilt werden.

Eine vierte Ventileinrichtung 43, welche insbesondere an der zweiten Verzweigungsstelle 44 angeordnet ist, dient zur Regelung der Aufteilung des zweiten Teilstroms 24 in den Zweigstrom 41 und den dritten Teilstrom 42. Die vierte Ventileinrichtung 43 kann das System 40 derart regeln, dass der zweite Teilstrom 24 ausschließlich in den Zweigstrom 41 geleitet wird. In einer anderen Ventilstellung der vierten Ventileinrichtung 43 wird der gesamte zweite Teilstrom 24 an Kühlmittel in den dritten Teilstrom 42 geleitet. In einer anderen Ventilstellung der vierten Ventileinrichtung 43 wird ein Teil des zweiten Teilstroms 24 in den Zweigstrom 41 und der andere Teil des zweiten Teilstroms 24 in den dritten Teilstrom 42 geleitet.

Das den Zweigstrom 41 durchströmende Kühlmittel durchströmt den Abgaswärmetauscher 31, wird dabei insbesondere erwärmt und durchströmt anschließend die zweite Wärmetauscherstufe 22, wobei dadurch das Arbeitsmittel im Organic-Rankine-Kreislauf 9 verdampft bzw. überhitzt wird.

In der Ventilstellung der vierten Ventileinrichtung 43, in der kein Kühlmittel in den Zweigstrom 41 geleitet wird, sondern ausschließlich in den dritten Teilstrom 42, erfolgt keine Erwärmung bzw. Verdampfung bzw. Überhitzung des Arbeitsmittels im Organic-Rankine-Kreislauf in der zweiten Wärmetauscherstufe 22.

An der ersten Vereinigungsstelle 45 werden der Zweigstrom 41, welcher die zweite Wärmetauscherstufe 22 durchströmt hat, mit dem dritten Teilstrom 42 wieder vereinigt.

Die erste Vereinigungsstelle 45 ist insbesondere abströmseitig der zweiten Wärmetauscherstufe 22 und/oder der vierten Ventileinrichtung 43 angeordnet.

Das zweite Wärmetauschermedium, insbesondere das Kühlmittel, welches in den dritten Teilstrom 42 strömt, weist die Temperatur $T_{VM}$ auf. Die Temperatur $T_{VM}$ entspricht im Wesentlichen der Temperatur des zweiten Wärmetauschermediums nach dem Durchströmen des Verbrennungsmotors 2.

Der Zweigstrom 41 weist nach dem Durchströmen der zweiten Wärmetauscherstufe 22 die Temperatur $T_{ZWT}$ auf. Die Temperatur $T_{ZWT}$ ist abhängig von der durch den Abgaswärmetauscher 31 in den Zweigstrom 41 eingebrachten Wärme und aufgrund der Wärmeübertragung zwischen dem Zweigstrom 41 und dem ersten Wärmetauschermedium, insbesondere dem Arbeitsmittel, in der zweiten Wärmetauscherstufe 22.

Aufgrund der vierten Ventileinrichtung 43 ist die Temperatur $T_{VWT}$ am Eintritt in die Vorwärmetauscherstufe 21 derart regelbar, dass die Temperatur $T_{VWT}$ Werte annimmt, für die gilt: $T_{VM} \leq T_{VWT} \leq T_{ZWT}$.

An der ersten Vereinigungsstelle 45 werden der Zweigstrom 41 und der dritte Teilstrom 42 zusammengeführt, wobei das zweite Wärmetauschermedium, insbesondere das Kühlmittel, die Temperatur $T_{VWT}$ aufweist und in die Vorwärmetauscherstufe 21 einströmt. Nach dem Durchströmen der Vorwärmetauscherstufe 21 werden der zweite Teilstrom 24 und der erste Teilstrom 23 an der zweiten Vereinigungsstelle 46 wieder vereinigt.

In der Vorwärmetauscherstufe 21 und/oder in der zweiten Wärmetauscherstufe 22 erfolgt die Wärmeübertragung zwischen dem Organic-Rankine-Kreislauf im Gegenstromprinzip. In einem anderen Ausführungsbeispiel erfolgt die Wärmeübertragung im Gleichstromprinzip. An der ersten Vereinigungsstelle 45 erfolgt insbesondere ein Vermischen des dritten Teilstroms 42 mit dem Zweigstrom 41. Bei einem besonders vorteilhaften Regelzustand weist der dritte Teilstrom 42 im Wesentlichen dieselbe Temperatur $T_{VM}$ auf, wie die Temperatur $T_{ZWT}$ des Zweigstroms 41, nachdem dieser den zweiten Wärmetauscher 22 durchströmt hat.

**Figur 4a** zeigt ein System 50, wobei die Vorwärmetauscherstufe und die zweite Wärmetauscherstufe eine Baueinheit 2122 bilden, wobei die Pumpe 7 zuströmseitig des Verbrennungsmotors 2 angeordnet ist. Gleiche Merkmale sind mit den gleichen Bezugszeichen beschrieben wie in den vorherigen Figuren. Im Unterschied zu Figur 3 sind die Vorwärmetauscherstufe 21 und die zweite Wärmetauscherstufe 22 in einer Baueinheit 2122 angeordnet bzw. sind insbesondere einteilig ausgebildet.

Beispielsweise durch eine Abschaltung der Speisepumpe 8 des Organic-Rankine-Kreislaufes wird eine Wärmeankopplung in den Organic-Rankine-Kreislauf verhindert. Es erfolgt damit eine Nutzung der Abgaswärme zum beschleunigten Motorwarmlauf. Es erfolgt eine Regelung des Organic-Rankine-Kreislaufs, insbesondere durch die Speisepumpe 8, derart, dass der Organic-Rankine-Kreislauf erst mittels der Speisepumpe 8 in Zirkulation versetzt wird, wenn die Motoraufwärmung abgeschlossen ist. Dies wird insbesondere mittels zumindest eines Temperatursensors detektiert, der die Temperatur des Kühlmittels des Verbrennungsmotors misst. Beim Erreichen und/oder Überschreiten eines festgelegten Temperaturwertes des Kühlmittels des Motorkühlkreislaufs beginnt die Speisepumpe 8, Arbeitsmittel im Organic-Rankine-Kreistauf 9 zu pumpen.

Eine Abzweigung zum Kühlmittelkühler kann beispielsweise nach dem Austritt des Kühlmittels aus dem Verbrennungsmotor 3 erfolgen oder in einer anderen Ausführungsform vor dem Eintritt des Kühlmittels in den Verbrennungsmotorblock 2.

Ferner kann die Kühlmittelpumpe 7 zuströmseitig des Verbrennungsmotors 2 oder wie in **Figur 4b** gezeigt, abströmseitig des Verbrennungsmotors 2 angeordnet sein.

In dem Wärmetauschersystem 60 der Figur 4b ist die zweite Ventileinrichtung 25, die beispielsweise als Thermostatventil ausgebildet ist, an der zweiten Vereinigungsstelle 46 angeordnet. Dies bietet den Vorteil, dass im Falle, in dem die Abwärme nicht vollständig durch den Organic-Rankine-Kreislauf abgeführt werden kann, die überschüssige Wärme durch den Kühlmittelkühler 3 abgeführt wird. Die Regelung des Durchflusses von Kühlmittel durch den Abgaswärmetauscher 31 ist insbesondere durch die vierte Ventileinrichtung 43 derart zu regeln, dass eine für den Gesamtwirkungsgrad des Systems optimale Temperatur erreicht wird. Insbesondere hat eine Regelung derart zu erfolgen, dass die maximal zulässige Temperatur des Kühlmittels erreicht wird. Die Wärmeübertragung zwischen Abgas und Kühlmittel im Abgaswärmetauscher 31 erfolgt im dargestellten Ausführungsbeispiel im Gleichstrom. Auf diese Weise kann besonders vorteilhaft ein Sieden des Kühlmittels des ersten Kreislaufs 10 und/oder des zweiten Kreislaufs besonders vorteilhaft verhindert werden. In einer anderen nicht dargestellten Ausführungsform erfolgt die Wärmeübertragung im Gegenstromprinzip. Auf diese Weise kann der Wärmeaustauschgrad besonders vorteilhaft erhöht werden und/oder die Baugröße des Abgaswärmetauschers 31 besonders vorteilhaft bei gleichem Austauschgrad verringert werden.

Die Temperatur T3 und der Druck P3 des Arbeitsmittels des Organic-Rankine-Kreislaufs 9 abströmseitig des Wärmeübertragers 2122 und zuströmseitig der Expansionsmaschine 6 sowie der Druck P0 des Arbeitsmittels abströmseitig des Kondensators und zuströmseitig des Wärmetauschers 2122 sind Betriebsparameter zur Bestimmung des Wirkungsgrades der Expansionsmaschine 6.

Die Sollwerte der Größen P0, P3 und T3 werden dabei aus Kennfeldern bestimmt. Die Kennfelder zum bevorzugten Betrieb des Motors verarbeiten die Umgebungstemperatur der Luft außerhalb des Kraftfahrzeugs, die Temperatur T1 des Kühlmittels abströmseitig des Verbrennungsmotors 2 und/oder zuströmseitig der zweiten Ventileinrichtung 25, die Fahrgeschwindigkeit und die Motorlast. Zur Ermittlung der Motorlast kann insbesondere die Motordrehzahl und/oder die Stellung des Gaspedals zum Gasgeben im Kraftfahrzeug verwendet werden.

Die Stellgröße für den Druck P0 ist insbesondere die Leistung eines nicht dargestellten Lüfters für den Kondensator 4 und/oder den Kühlmittelkühler 3.

Die Stellgröße für den Druck P3 ist insbesondere die Leistung der Speisepumpe 8.

Die Stellgröße für die Temperatur T3 ist insbesondere die Temperatur T2 des Kühlmittels zuströmseitig des Wärmetauschers 2122 und/oder abströmseitig des Abgaswärmetauschers 31. In einem anderen Ausführungsbeispiel kann alternativ die Temperatur T2 statt T3 verwendet werden, wobei eine insbesondere lastabhängige Temperaturdifferenz von 0,5K bis 30K zur Temperatur T2 addiert wird, die insbesondere bereits im Betriebskennfeld für T2 enthalten ist.

Die Einstellung der Temperatur T2 erfolgt insbesondere über den Durchfluss des Kühlmittels durch den Abgaswärmetauscher 31 mittels der vierten Ventileinrichtung 43 und/oder mittels zumindest einer weiteren nicht dargestellten Pumpe. Wird insbesondere bei maximalem Durchfluss ein bestimmter Wert der Temperatur T2 überschritten, wird Abgas, insbesondere mittels der dritten Ventileinrichtung 26 durch den Abgasbypass 13 geleitet.

In einer weiteren nicht dargestellten Ausführung bzw. Weiterbildung wird der erste Kreislauf 10 und/oder der zweite Kreislauf unter erhöhtem Druck betrieben bzw. ein Kühlmittel mit insbesondere höherem Glysantinanteil kommt zum Einsatz.

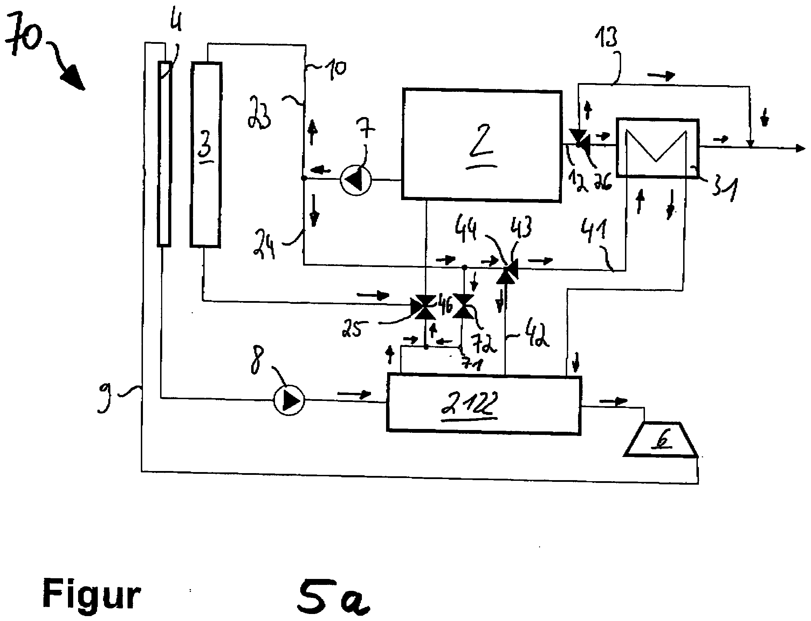

**Figur 5a** zeigt ein System 70 mit einem Organic-Rankine-Kreislauf mit einem ersten Bypassteilstrom 71 zum Bypassen des Abgaswärmetauschers 31 und/oder des Wärmetauschers 2122, wobei eine erste Ventileinrichtung 72 in dem ersten Bypassteilstrom 71 angeordnet ist. Gleiche Merkmale sind mit den gleichen Bezugszeichen versehen wie in den vorherigen Figuren.

Auf diese Weise wird besonders vorteilhaft der Organic-Rankine-Kreislauf kühlmittelseitig überbrückt, wenn der Organic-Rankine-Kreislauf nicht betrieben werden soll, aber die Motoraufwärmung aber schon abgeschlossen ist. Die erste Ventileinrichtung 72 ist besonders vorteilhaft als Thermostatventil ausgebildet. Aufgrund des ersten Bypassteilstroms müssen Druckverluste des Organic-Rankine-Kreislaufs nicht überwunden werden, wodurch der Leistungsbedarf der Kühlmittelpumpe 7 und damit der Kraftstoffbedarf besonders vorteilhaft reduziert werden können.

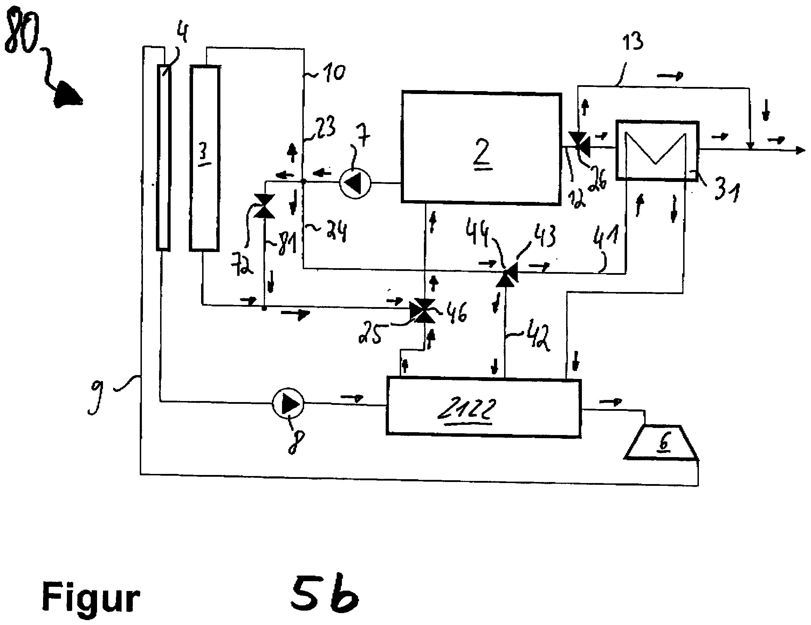

**Figur 5b** zeigt ein weiteres System 80 mit einem zweiten Bypassteilstrom 81, der im Wesentlichen eine Weiterbildung oder eine Alternative zu der Ausbildung des Systems in Figur 6a bildet. Gleiche Merkmale sind mit den gleichen Bezugszeichen wie in den vorherigen Figuren versehen.

Der zweite Bypassteilstrom 81 ist insbesondere abströmseitig des Verbrennungsmotors 2 und abströmseitig der Kühlmittelpumpe 7 zum Bypassen des Kühlmittelkühlers 3 angeordnet.

Die Merkmale der verschiedenen Ausführungsbeispiele sind beliebig miteinander kombinierbar. Die Erfindung ist auch für andere als die gezeigten Gebiete einsetzbar.

An Stelle einer Aufspaltungsmöglichkeit des Kühlmittelkreislaufs an der zweiten Ventileinrichtung 25 (vgl. Fig. 2, 3, 4a) bzw. der Verzweigung nach dem Motor 2 (vgl. Fig. 4b, 5a, 5b) kann das System auch derart ausgebildet sein, dass auf eine parallele Anordnung von Kühler 3 und Vorwärmetauscherstufe 21 verzichtet und dafür eine Reihenanordnung von Kühler und Vorwärmestufe, ggf. kombiniert mit einer zweiten Wärmetauscherstufe, jeweils mit einem entsprechenden Bypass versehen, vorgesehen sein kann, wobei die Reihenfolge Kühter/Vorwärmetauscherstufe oder Vorwärmetauscherstufe/Kühler sein kann.

**Patentansprüche**

1. System, aufweisend
zumindest einen ersten Kreislauf (10) zur Kühlung eines Verbrennungsmotors (2) für ein Kraftfahrzeug, zumindest einen Abgaswärmetauscher (31) zur Verbrennungsmotorabwärmenutzung, zumindest einen Organic-Rankine-Kreislauf (9) zum Antrieb zumindest einer Expansionsmaschine (6) und zur Durchströmung mit zumindest einem ersten Wärmetauschermedium, wobei der Organic-Rankine-Kreislauf (9) neben einer Vorwärmetauscherstufe (21) zum Vorwärmen und/oder Verdampfen zumindest eine zweite Wärmetauscherstufe (22) zum Verdampfen und/oder Überhitzen des ersten Wärmetauschermediums aufweist, wobei die Vorwärmetauscherstufe (21) und die zweite Wärmetauscherstufe (22) von einem zweiten Medium, insbesondere einem Kühlmittel, durchströmt sind, wobei zumindest ein Kühlmittelkühler (3) zur Frühlung des Verbrennungsmotors (2) und/oder die Vorwärmetauscherstufe (21) im ersten Kreislauf (10) angeordnet sind, wobei im ersten Kreislauf (10) abströmseitig des Verbrennungsmotors (2) zumindest eine erste Verzweigungsstelle vorgesehen ist zur Aufteilung in einen ersten Teilstrom (23) zur Durchströmung des Kühlmittelkühlers (3) und in einen zweiten Teilstrom (24), **dadurch gekennzeichnet, dass** der erste Kreislauf (10) zumindest eine zweite Verzweigungsstelle (44) abströmseitig der ersten Verzweigungsstelle aufweist zur Aufteilung des zweiten Teilstroms (24) in einen dritten Teilstrom (42) und in einen Zweigstrom (41) zur Durchströmung des Abgaswärmetauschers (31) oder des Abgaswärmetauschers (31) und der zweiten Wärmetauscherstufe (22).

2. System nach Anspruch 1, **dadurch gekennzeichnet, dass** der Organic-Rankine-Kreislauf (9) zumindest einen Kondensator (4) zur Verflüssigung des ersten Wärmetauschermediums aufweist.

3. System nach einem der vorhergehenden Ansprüche, **dadurch gekennzeichnet, dass** ein zweiter Kreislauf (32) vorgesehen ist, in dem der zumindest eine Abgaswärmetauscher (31) und die zweite Wärmetauscherstufe (22) angeordnet sind.

4. System nach Anspruch 3, **dadurch gekennzeichnet, dass** der erste Kreislauf (10) und der zweite Kreislauf (32) parallel geschaltet sind.

5. System nach einem der Ansprüche 1 bis 4, **dadurch gekennzeichnet, dass** zumindest eine erste Vereinigungsstelle (45) zuströmseitig der Vorwärmetauscherstufe (21) vorgesehen ist zur Vereinigung des Zweigstroms (41) und des dritten Teilstroms (42) zum zweiten Teilstrom (24).

6. System nach einem der Ansprüche 1 bis 5, **dadurch gekennzeichnet, dass** zumindest eine zweite Vereinigungsstelle (46) zuströmseitig des Verbrennungsmotors (2) vorgesehen ist zur Vereinigung des ersten Teilstroms (23) und des zweiten Teilstroms (24).

7. System nach einem der Ansprüche 1 bis 6, **dadurch gekennzeichnet, dass** an der ersten Verzweigungsstelle ein zweiter Bypassteilstrom (81) zum Bypassen des Kühlmittelkühlers (3) abzweigt und/oder dass abströmseitig der Vorwärmetauscherstufe (21) ein erster Bypassteilstrom (71) zum Bypassen des Abgaswärmetauschers (31) und/oder der zweiten Wärmetauscherstufe (22) abzweigt.

8. System nach einem der vorhergehenden Ansprüche, **dadurch gekennzeichnet, dass** die Vorwärmetauscherstufe (21) und die zweite Wärmetauscherstufe (22) eine Baueinheit (2122) bilden.

9. System nach einem der vorgehenden Ansprüche, **dadurch gekennzeichnet, dass** die Vorwärmetauscherstufe als ein Verdampfer und/oder die zweite Wärmetauscherstufe (22) als ein Überhitzer ausgebildet sind.

10. System nach einem der vorhergehenden Ansprüche, **dadurch gekennzeichnet, dass** der erste Kreislauf (10) eine Pumpe (7) zum Pumpen des zweiten Wärmetauschermediums aufweist, wobei die Pumpe (7) abströmseitig oder zuströmseitig des Verbrennungsmotors (2) angeordnet ist.

**Claims**

1. A system, having
at least one first cycle (10) for cooling an internal combustion engine (2) for a motor vehicle, at least one exhaust gas heat exchanger (31) for using the waste heat of the internal combustion engine, at least one Organic Rankine cycle (9) for driving at least one expansion machine (6) and for the throughflow of at least one first heat exchanger medium, wherein the Organic Rankine cycle (9), apart from a pre-heat exchanger stage (21) for preheating and/or evaporating, has at least one second heat exchanger stage (22) for evaporating and/or overheating the first heat exchanger medium, wherein the pre-heat exchanger stage (21) and the second heat exchanger stage (22) are flowed through by a second medium, in particular a coolant, wherein at least one coolant cooler (3) for cooling the internal combustion engine (2) and/or the pre-heat exchanger stage (21) are arranged in the first cycle (10), wherein at least one first branch site for the division into a first partial flow (23) for flowing through the coolant cooler (3) and into a second partial flow (24) is provided in the first cycle (10) at the outflow side of the internal combustion engine (2), **characterised in that** the first cycle (10) has at least one second branch site (44) at the outflow side of the first branch site for the division of the second partial flow (24) into a third partial flow (42) and into a branch flow (41) for flowing through the exhaust gas heat exchanger (31) or the exhaust gas heat exchanger (31) and the second heat exchanger stage (22).

2. The system according to claim 1, **characterised in that** the Organic Rankine cycle (9) has at least one condenser (4) for the liquefaction of the first heat exchanger medium.

3. The system according to one of the preceding claims, **characterised in that** a second cycle (32) in which the at least one exhaust gas heat exchanger (31) and the second heat exchanger stage (22) are arranged is provided.

4. The system according to claim 3, **characterised in that** the first cycle (10) and the second cycle (32) are switched in parallel.

5. The system according to one of claims 1 to 4, **characterised in that** at least one first unification site (45) for the unification of the branch flow (41) and the third partial flow (42) to the second partial flow (24) is provided at the inflow side of the pre-heat exchanger stage (21).

6. The system according to one of claims 1 to 5, **characterised in that** at least one second unification site (46) for the unification of the first partial flow (23) and the second partial flow (24) is provided at the inflow side of the internal combustion engine (2).

7. The System according to one of claims 1 to 6, **characterised in that** a second bypass partial flow (81) for the bypass of the coolant cooler (3) branches off at the first branch site and/or that a first bypass partial flow (71) for the bypass of the exhaust gas heat exchanger (31) and/or the second heat exchanger stage (22) branches off at the outflow side of the pre-heat exchanger stage (21).

8. The system according to one of the preceding claims, **characterised in that** the pre-heat exchanger stage (21) and the second heat exchanger stage (22) form one component (2122).

9. The system according to one of the preceding claims, **characterised in that** the pre-heat exchanger stage is formed as an evaporator and/or the second heat exchanger stage (22) is formed as a superheater.

10. The system according to one of the preceding claims, **characterised in that** the first cycle (10) has a pump (7) for pumping the second heat exchanger medium, wherein the pump (7) is arranged at the outflow side or inflow side of the internal combustion engine (2).

**Revendications**

1. Système présentant
au moins un premier circuit (10) servant au refroidissement d'un moteur à combustion interne (2) pour un véhicule automobile,
au moins un échangeur de chaleur de gaz d'échappement (31) servant à l'utilisation de la chaleur dissipée par le moteur à combustion interne, au moins un cycle organique de Rankine (9) servant à l'entraînement d'au moins une machine à expansion (6) et à la circulation avec au moins un premier milieu de l'échangeur de chaleur, où le cycle organique de Rankine (9) présente, en plus d'un étage de préchauffage (21) de l'échangeur de chaleur servant au préchauffage et / ou à l'évaporation, au moins un deuxième étage (22) de l'échangeur de chaleur servant à l'évaporation et / ou au surchauffage du premier milieu de l'échangeur de chaleur, où l'étage de préchauffage (21) de l'échangeur de chaleur et le deuxième étage (22) de l'échangeur de chaleur sont traversés par un deuxième milieu, en particulier un liquide de refroidissement, où au moins un radiateur à liquide de refroidissement (3) servant au refroidissement du moteur à combustion interne (2) et / ou l'étage de préchauffage (21) de l'échangeur de chaleur sont disposés dans le premier circuit (10), où il est prévu dans le premier circuit (10), côté sortie de flux du moteur à combustion interne (2), au moins un premier point de bifurcation servant à la répartition dans un premier flux partiel (23) prévu pour circuler à travers le radiateur à liquide de refroidissement (3), et à la répartition dans un deuxième flux partiel (24), **caractérisé en ce que** le premier circuit (10) présente, côté sortie de flux du premier point de bifurcation, au moins un deuxième point de bifurcation (44) servant à la répartition du deuxième flux partiel (24) dans un troisième flux partiel (42) et dans un flux de bifurcation (41) prévu pour circuler à travers l'échangeur de chaleur de gaz d'échappement (31) et à travers le deuxième étage (22) de l'échangeur de chaleur à partir de l'échangeur de chaleur de gaz d'échappement (31).

2. Système selon la revendication 1, **caractérisé en ce que** le cycle organique de Rankine (9) présente au moins un condenseur (4) servant à la liquéfaction du premier milieu de l'échangeur de chaleur.

(2).

3. Système selon l'une des revendications précédentes, **caractérisé en ce qu'**il est prévu un deuxième circuit (32) dans lequel sont disposés l'échangeur de chaleur de gaz d'échappement (31) au moins au nombre de un et le deuxième étage (22) de l'échangeur de chaleur.

4. Système selon la revendication 3, **caractérisé en ce que** le premier circuit (10) et le deuxième circuit (32) sont montés en parallèle.

5. Système selon l'une quelconque des revendications 1 à 4, **caractérisé en ce qu'**il est prévu, côté entrée de flux de l'étage de préchauffage (21) de l'échangeur de chaleur, au moins un premier point de confluence (45) servant à faire confluer le flux de bifurcation (41) et le troisième flux partiel (42), pour former le deuxième flux partiel (24).

6. Système selon l'une quelconque des revendications 1 à 5, **caractérisé en ce qu'**il est prévu, côté entrée de flux du moteur à combustion interne (2), au moins un deuxième point de confluence (46) servant à faire confluer le premier flux partiel (23) et le deuxième flux partiel (24).

7. Système selon l'une quelconque des revendications 1 à 6, **caractérisé en ce qu'**un deuxième flux partiel de dérivation (81) prévu pour contourner le radiateur à liquide de refroidissement (3) se ramifie au niveau du premier point de bifurcation et / ou **en ce qu'**un premier flux partiel de dérivation (71) prévu pour contourner l'échangeur de chaleur de gaz d'échappement (31) et / ou le deuxième étage (22) de l'échangeur de chaleur se ramifie côté sortie de flux de l'étage de préchauffage (21) de l'échangeur de chaleur.

8. Système selon l'une quelconque des revendications précédentes, **caractérisé en ce que** l'étage de préchauffage (21) de l'échangeur de chaleur et le deuxième étage (22) de l'échangeur de chaleur forment un ensemble unitaire (2122).

9. Système selon l'une quelconque des revendications précédentes, **caractérisé en ce que** l'étage de préchauffage de l'échangeur de chaleur est conçu comme un évaporateur et / ou le deuxième étage (22) de l'échangeur de chaleur est conçu comme un surchauffeur.

10. Système selon l'une quelconque des revendications précédentes, **caractérisé en ce que** le premier circuit (10) présente une pompe (7) servant au pompage du deuxième milieu de l'échangeur de chaleur, où la pompe (7) est disposée côté sortie de flux ou côté entrée de flux du moteur à combustion interne

**Figur 1**

Figur 2

**Figur 3**

EP 1 925 806 B1

Figur 4a

Figur 46

Figur                5a

EP 1 925 806 B1

**Figur** **5b**

EP 1 925 806 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2002325470 B
- DE 10233763
- EP 1441121 A
- FR 2868809
- EP 1431523 A
- DE 60116596
- US 5000003 A
- US 4033135 A